Europäisches Patentamt

European Patent Office

Office européen des brevets

(11) Veröffentlichungsnummer: **0 208 073**

**A2**

# EUROPÄISCHE PATENTANMELDUNG

(21) Anmeldenummer: 86105710.7

(51) Int. Cl.⁴: **F16L 37/12**

(22) Anmeldetag: 25.04.86

(30) Priorität: 05.07.85 DE 3524137

(43) Veröffentlichungstag der Anmeldung:
14.01.87 Patentblatt 87/03

(84) Benannte Vertragsstaaten:
FR GB IT SE

(71) Anmelder: THYSSEN PLASTIK ANGER KG
Anzinger Strasse 1
D-8000 München 80(DE)

(72) Erfinder: Schwarzensteiner, Hermann
Girletweg 5
D-8445 Windberg(DE)

(54) Steckverbindung.

(57) Mit der Erfindung wird eine lösbare Steckverbindung, bestehend aus Steckerteil mit Verriegelungskeilen und Keilschieber, vorgeschlagen, die sowohl als selbständiges Teil, als auch in Aggregate, Maschinenteile, usw. integriert und eingesetzt werden kann. Die Steckverbindung ist sowohl radial, als auch axial verriegelt, kraftschlüssig und gegen Verdrehen gesichert. In dem Gehäuseteil sind axial verlaufende Nuten vorgesehen, in die Rippen, am äußeren Umfang des Steckerteiles vorgesehen, eingesetzt werden. Federnd gelagerte Verriegelungskeile über eine Abschrägung an Betätigungsgabeln des Keilschiebers verriegeln sich nach Eindrücken des Steckerteiles in das Gehäuse. In eine am Ende der Nuten vorgesehene Ringnut.

Fig. 1

EP 0 208 073 A2

## STECKVERBINDUNG

Die Erfindung bezieht sich auf eine Steckverbindung, insbesondere für Direktanschlüsse von Aggregaten untereinander oder an Hydraulikleitungen, Elektroinstallationen, Wellen oder dergl. mit einem Gehäuse und einem darin arretierten Steckerteil, die gegeneinander zum Beispiel mittels eines O-Ringes abgedichtet sind.

Steckverbindungen dieser Art sind an sich bekannt und dienen, wie zum Beispiel die gemäß der DE-OS 29 52 468 zur Verbindung von sog. Grundkörpern wie Ventilgehäusen oder dergl. mit Druckluft-oder Hydraulikleitungen.

Rohrverbindungen mit Anschlußstücken und Überwurfmuttern sind aus der DE-OS 23 62 527 bekannt geworden, ähnlich ausgebildete - schraubbare Ausführungen als Kupplung für Druckleitungen aus der DE-PS 31 08 651. Die DE-OS 23 43 811 zeigt eine Schnellkupplung für Schlauch- und Rohrleitungen mit einem Stecknippel und einer Einsteckmuffe, die ineinander gesteckt durch eine U-förmige Kupplungsklammer zusammengehalten werden.

Diesen Rohrverbindungen ist gemeinsam, daß sie einerseits mehrere Handgriffe und folglich Zeit für die Kupplung und Entkupplung benötigen, einen erheblichen Platzbedarf haben und nicht beide Teile der Steckkupplungen, also das Gehäuse und das Steckerteil, in Geräte integrierbar sind. Für die Verbindung von Zu-bzw. Abflußleitungen zweier direkt aneinander oder aufeinander angeordneter Aggregate sind sie nicht geeignet. Darüberhinaus weisen die meisten dieser Schnellkupplungen zu viele Einzelteile auf, die bereits beider Montage daher aufwendig sind.

Hier will die Erfindung Abhilfe schaffen. Der Erfindung liegt daher die Aufgabe zugrunde, eine Steckverbindung zu schaffen, durch die die Verbindung verschiedener Aggregate miteinander, bzw. mit Fluidleitungen, Elektroinstallationen, Wellen usw., sowie deren Entkupplung kurzfristig ohne Zuhilfenahme von Werkzeug einfach und schnell, auch mittels automatisierter Werkzeuge der Großserienfertigung hergestellt und gelöst werden können.

Erfindungsgemäß wird dies dadurch erreicht, daß die Steckkupplung aus einem Gehäuseteil und einem Steckerteil mit damit verriegelbaren Keilschieber für die in Ausschnitten des Mantels des Steckerteiles radial beweglichen Verriegelungskeile besteht, diese Verriegelungskeile mit einem rückwärtigen Fortsatz in eine Aussparung ihrer jeweiligen Betätigungsgabel des axial beweglichen Keilschiebers eingreifen, daß axial angeordnete Rippen am äußeren Mantel des Steckerteiles vorgesehen sind, sowie Führungsnuten im Steckerteil zwischen Stegen für die Betätigungsgabel des Keilschiebers vorgesehen sind, am Keilschieber ein geschlitzter Schnappring mit einem rückwärtigen Wulst für eine entsprechende Nut in den Stegen des Steckerteiles angebracht ist.

Vorteilhafterweise ist in die Zentralbohrung eine Büchse eingesetzt.

Vorteilhafterweise ist das Steckerteil gegenüber dem Basisteil mittels Ringdichtungen abgedichtet.

Vorteilhafterweise besteht der Keilschieber und die Verriegelungskeile aus Kunststoff.

Vorteilhafterweise besteht das Gehäuseteil aus Kunststoff.

Vorteilhafterweise besteht das Steckerteil aus Kunststoff.

Mit der gemäß der Erfindung vorgeschlagenen Steckverbindung sind verschiedene Vorteile erzielbar. Zunächst ist die Steckverbindung durch einfaches Eindrücken des Steckerteiles in das Gehäuseteil, sowohl axial, als auch radial fest verriegelt und somit für die Verbindung von den verschiedensten Aggregaten im Maschinen-, Kraftfahrzeug-, Flugzeugbau usw. geeignet. Sie kann rasch, mit einem Handgriff, wieder entriegelt und somit gelöst werden.Auch automatisch wirkende Werkzeuge sind, wie im Großserienbau gefordert, ohne weiteres in die Lage zu versetzen, diese Verbindungen herzustellen und zu lösen. Zusätzlich zur axial und radialen Verriegelung weist die Steckverbindung in der Wirkstellung auch eine wirksame Drehsicherung auf, die für viele Anwendungsfälle von Vorteil ist. Die Axialsicherung erfolgt dabei durch bewegliche Keile, die über einen Keilschieber ver riegelt, bzw. entriegelt werden und in eine am Gehäuse umlaufende Nut beim Eindrücken des Steckerteiles in das Gehäuseteil einrasten. Der Keilschieber übernimmt zusätzlich die Verriegelung der Gesamtverbindung und kann je nach Einsatzbereich in verschiedenen Abwandlungen hergestellt werden, während die Drehsicherung durch Rippen außen am Steckerteil erfolgt. Die Abdichtung zwischen Gehäuse und Steckerteil wird mittels üblicher Gummidichtelemente erzielt.

Die Erfindung ist nachstehend anhand eines in den Abbildungen dargestellten Ausführungsbeispieles näher erläutert.

Es zeigt:

Figur 1 eine perspektivische Darstellung der Steckverbindung in ihren Einzelteilen,

Figur 2 einen Teilschnitt im entriegelten Zustand, und

Figur 3 den Teilschnitt gem.Figur 2 in der Wirkstellung.

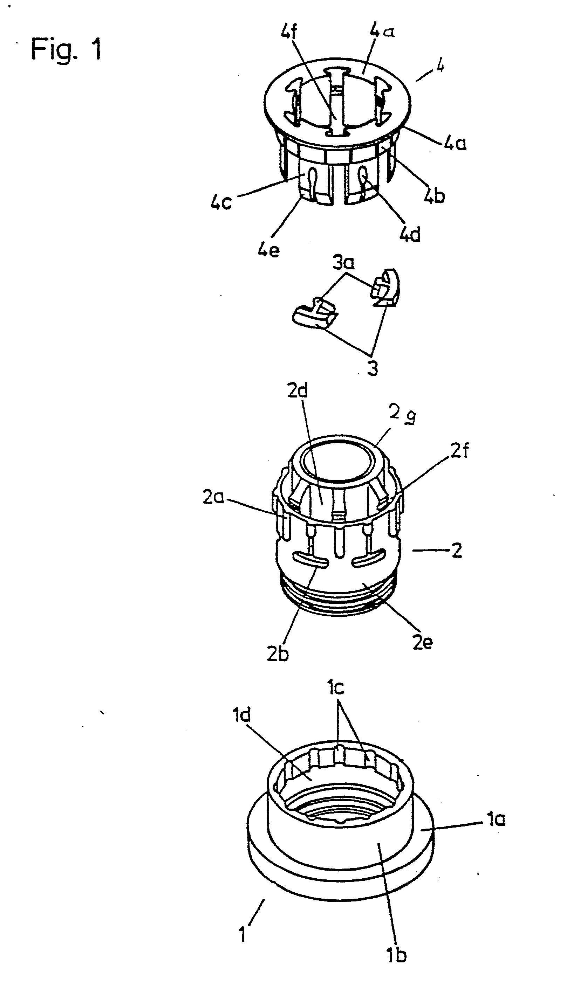

Die Figur 1 zeigt ein Gehäuseteil 1 mit Zentralbohrung für die Aufnahme des Steckerteiles 2.

Das Gehäuseteil 1 besteht aus einem Flansch 1a und einem zylindrischen Mantel 1b, in dessen inneren Umfang Nuten 1c vorgesehen sind, die, nach oben und unten offen, der Aufnahme der als Verdrehsicherung außen am Steckerteil 2 angebrachten Rippen 2a dienen, während die Ringnut 1d für die Aufnahme der Verriegelungskeile 3 dient. Diese Verriegelungskeile 3 federn beim Eindrücken des Steckerteiles 2 in das Gehäuseteil 1 nach innen, da deren rückwärtige Fortsätze 3a in den Aussparungen 4d der Betätigungsgabeln 4c gelagert sind und so von den Schlitzen des Schnappringes 4b flankiert sind.

Das Steckerteil 2 besteht an sich aus einem Formkörper 2 mit einer Zentralbohrung und wird durch den darin eingedrückten Keilschieber 4 und die Verriegelungskeile 3 komplettiert. Der Formkörper 2 besteht im wesentlichen aus einem Rippen 2a als Verdrehsicherung und Schlitze 2b für die Lagerung der radial beweglichen Verriegelungskeile 3 aufweisenden Mantel 2e, der über Stege 2f, die eine umlaufende Nut aufweisen, mit dem inneren rohrförmigen Träger 2g verbunden ist, wobei in den Träger 2g hinter den Schlitzen 2b im Bereich der Führungsnuten 2d weitere Aussparungen 2c vorgesehen sind, in welche die rückwärtigen Fortsätze 3a der Verriegelungskeile 3 nach Erreichen ihrer Wirkstellung ragen.

Der Keilschieber 4 besitzt einen oberen Rand 4, sowie darunter einen geschlitzten Schnappring 4b. Dieser Schnappring 4b besitzt, auf Lücke gesetzt und nach unten ragend, einen Kranz von federnden Fortsätzen, die Betätigungsgabeln 4c für die Verriegelungskeile 3, die mit ihren rückwärtigen Fortsätzen 3b in die Schlitze 4d eingreifen und durch die keilförmigen Flächen 4e radial nach außen gedrückt werden.

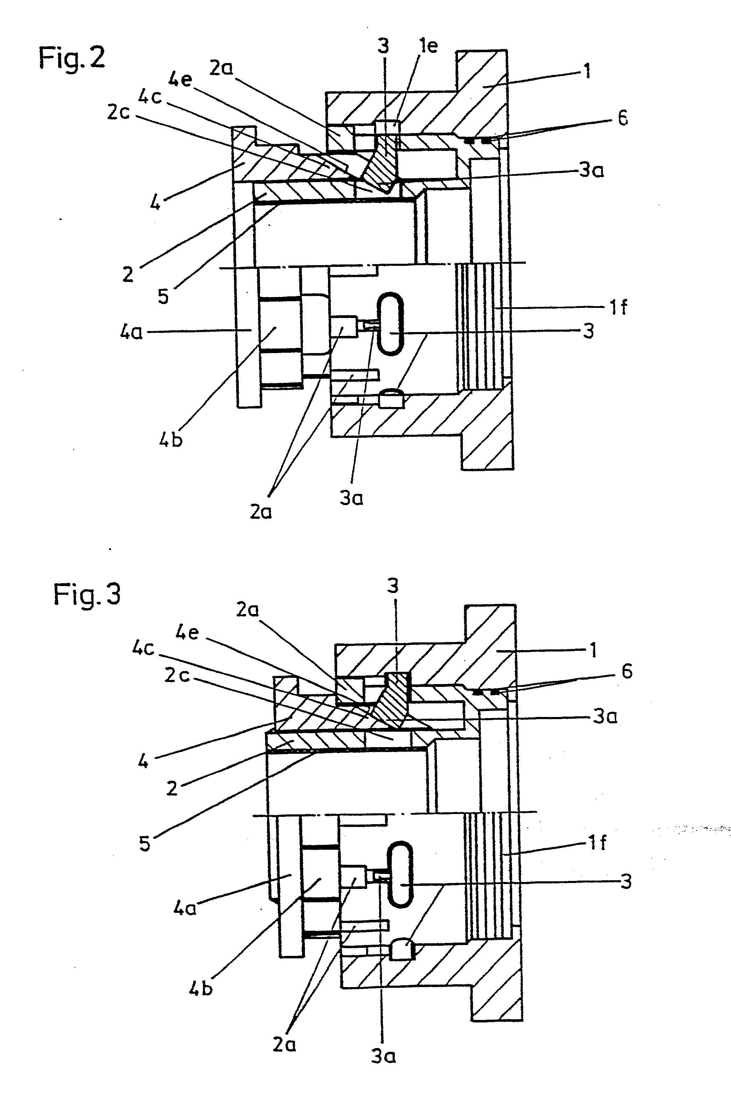

Nach Einlegen der Verriegelungskeile 3 in die Schlitze 2b und den Keilschieber 4 in den Formkörper 2 ist dieser mittels Schnappverbindung fest mit diesem verbunden und bildet so das eigentliche Steckerteil 2. Diese Einheit, Steckerteil 2, wird dann in das Gehäuseteil 1 eingesetzt. Mit 5 ist eine Büchse bezeichnet, die in der Zentralbohrung des Steckerteiles 2 eingesetzt werden kann. Die Abdichtung des Steckerteiles 2 gegen das Basisteil 2 erfolgt über Dichtringe 6. In der Wirkstellung, d.h. nach erfolgtem Eindrücken des Steckerteiles 2 in das Gehäuseteil 1 schnappen die Verriegelungskeile 3 in die Ringnut 1d unterhalb der Nuten 1c, wo sie, wie aus Figur 2 und 3 ersichtlich, am Zurückfedern gehindert werden und erst durch Ziehen am Steckerteil 2 (Keilschieber 4) wieder aus ihrer Wirkstellung lösbar sind.

Die Figur 2 zeigt das Steckerteil 2 vor dem Eindrükken in seine Wirkstellung im Gehäuseteil 1, wie sie in Figur 3 dargestellt ist.

Beim Eindrücken des Steckerteiles 2 werden die Verriegelungskeile 3 über am äußeren Umfang des Steckerteiles 2 angebrachte, jedem Verriegelungskeil 3 zugeordnete keilförmige Abschrägungen 4e der Verriegelungskeile 4c, die am Keilschieber 4 vorgesehen sind, nach außen in die Nut 1d des Gehäuseteiles 1 gedrückt und rasten dort ein. Der Absatz des geschlitzten Schnappringes 4b dient als Anschlag und zeigt das Erreichen der Wirkstellung an, wie aus Figur 3 ersichtlich.

Durch Ziehen am Rand 4a des Keilschiebers 4 wird die keilförmige Abschrägung 4e wieder nach außen bewegt und die Verriegelungskeile 3 werden freigeben. Sie fahren sodann in ihre Ruhelange in den Aussparungen 2b zurück, wobei ihre rückwärtigen Fortsätze 2a sich in die Schlitze 2c legen. Das Steckerteil 2 kann insgesamt vom Gehäuseteil 1 abgezogen werden.

Sowohl das Gehäuseteil 1, als auch das Steckerteil 2 können anstelle der dargestellten Flansche 1a, bzw 2d in die zu verbindenden Aggregate integriert sein. So kann beispielsweise eine mit dem Steckerteil versehene, in den Abbildungen nicht dargestellte, Wasserpumpe über das in den ebenfalls nicht dargestellten Motorblock integrierte Gehäuseteil 1 mit diesem auf einfache Weise, durch bloßes Eindrücken, verbunden und später durch Ziehen wieder davon gelöst werden. Ein selbständiges Lösen des Steckerteiles 2 vom Gehäuseteil 1 ist nicht möglich.

Das Gehäusteil 1 und das Steckerteil 2 können selbstverständlich auch als Bestandteile anderer Aggregate Machinenteile, Wellen, Endstücke von Kabeln usw. dienen. Auch ist der Einsatz als selbständiges Verbindungselement , bzw. Adapter möglich.

**Ansprüche**

1. Steckverbindung, insbesondere für Direktanschlüsse von Aggregaten untereinander oder an Hydraulikleitungen, Elektroinstallationen, Wellen oder dergl. mit einem Gehäuse und einem darin arretierten Stekkerteil, die gegeneinander z.B. mittels eines O-Ringes abgedichtet sind, dadurch gekennzeichnet, daß die Steckkupplung aus einem Gehäuseteil (1) und einem Steckerteil - (2) einem damit verriegelbaren Keilschieber (4) für die in Ausschnitten (2b) des Mantels (2e) des Steckerteiles (2) radial beweglichen Verriegelungskeile - (3) besteht, diese Verriegelungskeile (3) mit einem rückwärtigen Fortsatz (3a) in eine Aussparung (4d) ihrer jeweiligen Betätigungsgabel (4c) des axial beweglichen Keilschiebers (4) eingreifen, daß axial angeordnete Rippen (2a) am äußeren Mantel (2e) des Steckerteiles (2), sowie Führungsnuten (2d) im Steckerteil (2) zwischen Stegen (2f) für die Betätigungsgabeln (4c) des Keilschiebers (4) vorgesehen sind und am Keilschieber (4) ein, die Betätigungsgabeln (4c) tragender, geschlitzter Schnappring (4b) mit einem rückwärtigen Wulst für eine entsprechende Nut (2d) in den Stegen (2f) des Steckerteiles (2) angebracht ist.

2. Steckverbindung nach Anspruch 1, <u>dadurch gekennzeichnet</u>, daß in die Zentralbohrung eine Büchse (5) eingesetzt ist.

3. Steckverbindung nach Anspruch 1 und 2, <u>dadurch gekennzeichnet</u>, daß das Steckerteil (2) gegenüber dem Basisteil (1) mittels Ringdichtungen (6) abgedichtet ist.

4. Steckverbindung nach Anspruch 1 bis 3, <u>dadurch gekennzeichnet</u>, daß der Keilschieber (4) und die Verriegelungskeile (3) aus Kunststoff bestehen.

5. Steckverbindung nach Anspruch 1 und einem der folgenden, <u>dadurch gekennzeichnet</u>, daß das Gehäuseteil (1) aus Kunststoff besteht.

6. Steckverbindung nach Anspruch 1 und einem der folgenden, <u>dadurch gekennzeichnet</u>, daß das Steckerteil (2) aus Kunststoff besteht.

Fig. 1

Fig.2

Fig.3